# FASCICULE DE BREVET EUROPEEN

(11) **EP 0 983 939 B1**
(45) Date de publication et mention de la délivrance du brevet: **03.03.2004**
(21) Numéro de dépôt: 99402166.5
(22) Date de dépôt: 01.09.1999
(51) Int. Cl.: B64D 45/02, F02K 1/70

(54) **Nacelle de turboréacteur à double flux avec inverseur de poussée à élément mobile mis à la masse**
Bläsertriebwerksgondel mit einer Schubumkehrvorrichtung mit geerdetem beweglichem Teil
Turbofan nacelle including thrust reverser with grounded mobile part

(30) Priorité: 03.09.1998 FR 9811004
(43) Date de publication de la demande: 08.03.2000
(73) Titulaire: Hurel-Hispano, 76700 Gonfreville l'Orcher (FR)
(72) Inventeur: Hogie, Jean-Paul René André, 76600 Le Havre (FR); Vauchel, Guy Bernard, 76610 Le Havre (FR)
(74) Mandataire: Maureau, Philippe

(56) Documents cités:
- CA-A- 2 207 805
- FR-A- 2 578 293

## Description

La présente invention concerne une nacelle de turboréacteur à double flux comportant un dispositif d'inversion de poussée à élément mobile mis à la masse, selon le préambule de la revendication 1.

On rappelle que dans le cas d'un turboréacteur à double flux, le turboréacteur est équipé d'un conduit en arrière de la soufflante dont le but est de canaliser le flux secondaire dit froid, ce conduit est constitué d'une paroi interne qui entoure la structure du moteur proprement dite en arrière de la soufflante, et d'une paroi externe dont la partie amont vient en continuité du carter moteur qui entoure la soufflante. Cette paroi externe peut canaliser à la fois le flux secondaire et le flux primaire dans sa partie aval, et ceci en arrière de l'éjection du flux primaire, dit chaud, dans le cas de nacelle à flux mélangés ou à flux confluents par exemple, mais dans d'autres cas, la paroi externe ne canalise que le flux secondaire, dans le cas de nacelles dites à flux séparés.

Une paroi peut également caréner l'extérieur du moteur, c'est à dire l'extérieur du carter qui entoure la soufflante et l'extérieur de la paroi extérieure du conduit décrit ci-dessus, ceci dans le but de minimiser la traînée de l'ensemble propulsif. Ceci est notamment le cas pour des ensembles propulsifs rapportés sur l'extérieur d'aéronef, particulièrement lorsque ces ensembles propulsifs sont attachés sous les ailes ou à l'arrière du fuselage.

L'inverseur de poussée associé qui assure une déviation du flux en procurant une inversion de poussée est d'un type connu en soi, soit à portes ou volets, soit à grilles.

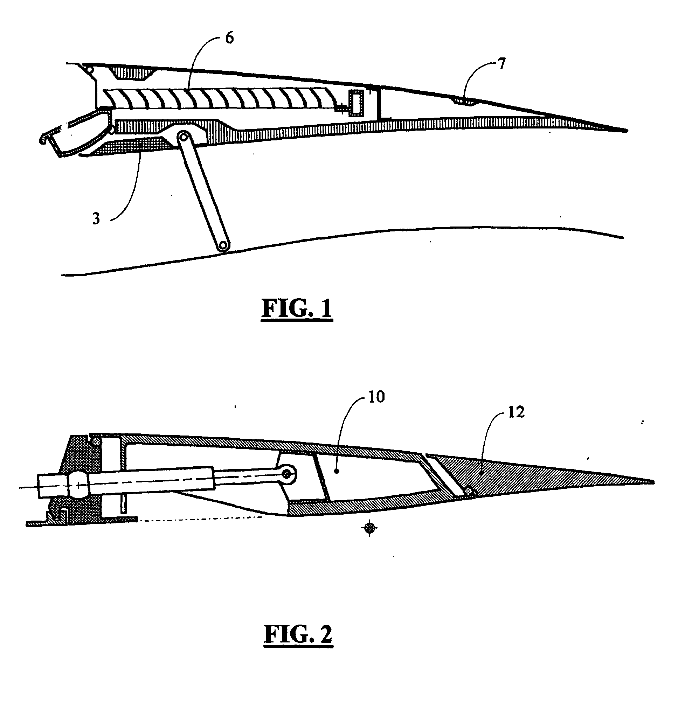

La figure 1 des dessins joints montre un exemple connu de réalisation d'un inverseur de poussée dit à grilles appliqué à un turboréacteur à double flux dans lequel un capotage 7, formant, lors du fonctionnement du turboréacteur en poussée directe, tout ou une partie de l'extrémité aval de la paroi externe du canal annulaire de circulation de la veine de flux secondaire, est susceptible d'être déplacé axialement dans des glissières en direction aval au moyen d'un système de commande comportant par exemple des vérins fixés sur la partie amont de l'inverseur. Le déplacement du capotage vers l'aval entraîne le pivotement d'une pluralité de volets 3 qui viennent obturer le canal et dévier le flux pour former un flux inversé dont le guidage est obtenu au moyen d'un dispositif à grilles 6 disposées sur la périphérie externe dudit canal et qui sont découvertes après déplacement vers l'aval dudit capotage 7.
Des exemples de réalisation de ces inverseurs de poussée sont donnés par EP-A-0 109 219 et par US-A-3 500 645.

La figure 2 des dessins joints montre un exemple connu de réalisation d'un inverseur de poussée à portes appliqué à un turboréacteur à double flux dans lequel une pluralité de portes 10, réalisant une partie de la paroi externe, libère, lors de la manoeuvre de celles-ci, un passage au travers de ladite paroi externe et obstrue le canal annulaire à l'arrière dudit passage, guidant le flux vers l'extérieur et vers l'avant de la nacelle. Des exemples de réalisation de tels inverseurs sont donnés par FR 1 482 538.

Les parties mobiles, porte 10 ou capots arrières 7 dans les exemples ci-dessus sont reliés à la partie fixe de la structure de la nacelle par des éléments intermédiaires qui peuvent être des rotules dans le cas d'un entraînement de l'élément mobile en rotation ou un ensemble coulisseau glissière dans le cas d'un entraînement de l'élément mobile en translation.
Généralement l'emploi de lubrifiant est interdit à tout endroit de la nacelle. Pour garder un coefficient de frottement bas et éviter tout grippage des éléments intermédiaires dans le temps, un revêtement plastique est placé en interface de contact sur lesdits éléments intermédiaires.

Cette pellicule isole électriquement la partie mobile du reste de la structure de la nacelle.
Ainsi en cas de foudre, l'arc frappant la structure mobile ne peut se diffuser normalement vers la structure fixe qui est reliée à la masse de l'avion.
Plusieurs effets néfastes pénalisent la fiabilité de la structure. La conduction n'étant que peu ou pas assurée, le courant provoque un échauffement important notamment à l'endroit de l'impact, endommageant gravement la structure. La circulation du courant de foudroiement provoque des étincelages aux interfaces des éléments intermédiaires, endommageant le revêtement de contact et pouvant aller jusqu'à sa destruction complète, dégradant la manoeuvre des organes mobiles.

Habituellement une mise à la masse conventionnelle est appliquée pour assurer la continuité électrique. Une tresse relie les deux éléments en permettant un mouvement relatif des deux parties. Cette technologie, bien adaptée pour des longueurs réduites et une orientation et un maintien spécifiques de la liaison souple, procure au moins deux restrictions d'utilisation ;
- Lorsque la course relative devient importante par exemple dans un inverseur à grilles dans lequel le capotage arrière manoeuvre couramment de plus de 500 millimètres, la liaison souple n'est plus adaptée. Le débattement nécessaire pour assurer une course de cet ordre ne permet pas dans de bonne conditions de loger la tresse. De plus la masse générale de la structure s'en trouve fortement pénalisée.
- En cas de foudre, la tresse est soumise à des efforts électrodynamiques importants, procurant un effet de fouet sur la tresse dont le mouvement se trouve amplifié par la grande longueur de la liaison souple. Ce coup de fouet peut endommager la tresse elle-même et la structure environnante, ce qui n'est pas admissible.
Un des buts de l'invention est de proposer un moyen qui permet d'assurer une continuité électrique entre deux éléments mobiles à grand débattement, avantageusement en position de lissage de ligne ou de jet direct, qui sont isolés à leurs interfaces de manoeuvre.
Une nacelle de turboréacteur à double flux comportant un dispositif d'inversion de poussée du type précité comportant un élément mobile à grand débattement et une structure fixe et répondant à ces conditions conformément à l'invention est caractérisée en ce qu'un moyen de mise à la masse de l'élément mobile est constitué par un élément élastique à lame ressort en matériau électriquement conducteur, disposé dans une zone de contact entre l'élément mobile et la structure fixe en position de non-inversion de poussée et dedié pour le passage du courant électrique en dehors de tout organe mécanique utilisé pour le déplacement et sans pièce de jonction mobile par rapport aux éléments de nacelle et d'inverseur.
Avantageusement l'emplacement du moyen de mise à la masse est déterminé de manière à réduire la distance de la mise à la masse de la nacelle ou de l'inverseur de poussée. En outre la définition du moyen évite de pénaliser la masse.

D'autres caractéristiques et avantages de l'invention seront mieux compris à la lecture de la description qui va suivre d'un mode de réalisation de l'invention, en référence aux dessins annexés sur lesquels :
- La figure 1 représente une demi-vue schématique, en coupe longitudinale par un plan passant par l'axe de rotation d'un turboréacteur associé, d'un inverseur de poussée à grilles, en position fermée, d'un type connu et qui a fait l'objet d'une description ;
- la figure 2 représente une demi-vue schématique, en coupe longitudinale par un plan passant par l'axe de rotation d'un turboréacteur associé, d'un inverseur de poussée à portes, en position fermée, d'un type connu et qui a fait l'objet d'une description ;
- la figure 3 représente dans une vue analogue à la figure 1, un inverseur de poussée à grilles, en position jet direct, selon un mode de réalisation de l'invention ;
- la figure 4 représente une vue agrandie du détail IV de la figure 3 ;
- la figure 5 représente dans une vue analogue à la figure 1, un inverseur de poussée à portes, en position jet direct, selon un mode de réalisation de l'invention ;
- la figure 6 représente une vue agrandie du détail 6 de la figure 5 ;
- la figure 7 représente une perspective, un inverseur de poussée à portes écopes, en position jet direct, selon un mode de réalisation de l'invention.

L'application de l'invention à une nacelle de turboréacteur à double flux permet d'utiliser des éléments de la structure de la nacelle existante pour y installer, à l'endroit jugé le plus judicieux, un contact élastique qui vient en écrasement dans le sens de déplacement en refermeture d'un élément mobile du dispositif.

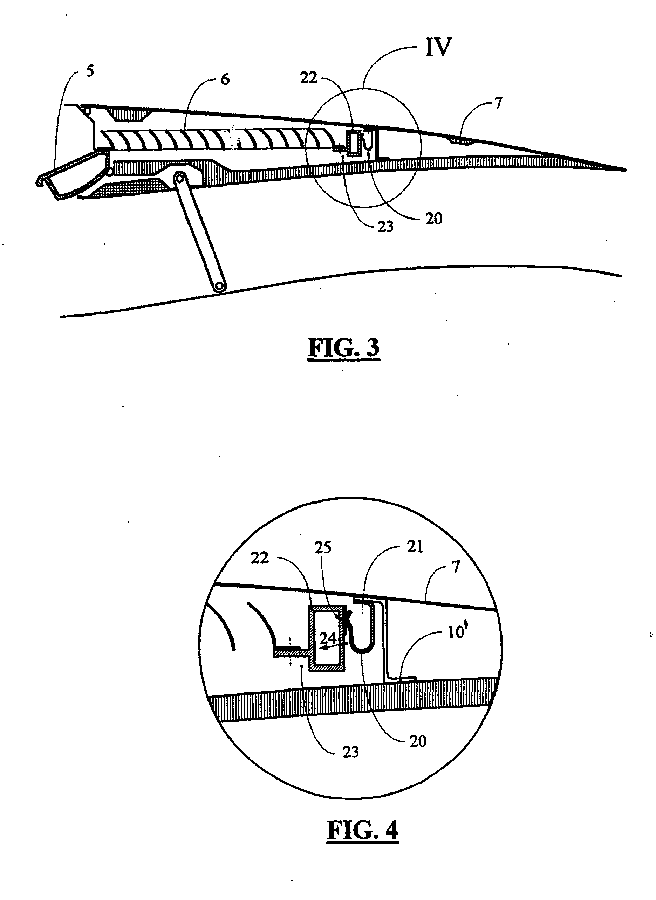

Selon un mode de réalisation de l'invention représenté sur les figures 3 et 4, une lame ressort profilée 20 est montée sur la partie interne de la structure du capotage arrière mobile 7 d'un inverseur à grilles 6.
Sur l'exemple représenté sur les figures 3 et 4 en jet direct, une structure verticale 10' de raidissement du capotage arrière mobile 7 vient près de l'anneau aval 22 support des grilles 6 de la structure fixe 5. Une interface 25 garantissant un bon comportement à l'usure peut être ajouté entre la lame ressort 20 et l'élément en contact de la structure fixe.
En fonction du matériau employé et/ ou de la protection surfacique des pièces de la structure, la largeur du contact est définie pour prendre en compte au moins trois fixations en contact avec la structure externe de la nacelle. Ce sont soit le contact direct sur la structure soit les fixations de liaison qui permettent le passage correct du courant de foudre.
La forme donnée au contact élastique 20, le matériau et l'orientation a une grande importance dans la fonction.

La forme doit permettre un contact permanent et fiable par un débattement adapté du contact élastique 20.
Le contact de la lame ressort 25 doit toujours être assuré dans les conditions de rupture du verrou principal. La configuration de verrou secondaire en action implique un léger recul du capotage arrière 7, le différentiel de déplacement étant assuré par le débattement de la lame ressort.
Le matériau employé doit être très bon conducteur et élastique comme le bronze au béryllium.
L'orientation doit permettre un accroissement de la pression de contact lors du passage du courant. En effet la force électrodynamique tend à déplier le métal dans le sens de la flèche 24. En plaçant le sens de dépliage 24 en direction de la pièce réceptrice fixe, il renforce la pression de contact améliorant le passage de courant à évacuer.
Le support des grilles 22 est relié directement à la structure supérieure de l'inverseur. Avantageusement elle est fixée sur la structure porteuse de l'inverseur c'est à dire la poutre 23. La poutre 23 suspend l'inverseur à la structure de l'avion au moyen de charnières. Ce sont les charnières qui principalement réalisent la continuité électrique, en effet le matériau utilisé pour la fonction pivot ne reçoit pas de traitement de surface, de plus la tolérance serrée des éléments et le contact dû à la masse même de la structure en fait un passage privilégié pour évacuer toute surcharge électrique.
L'emplacement du système peut se faire à n'importe quel endroit longitudinal de la structure de la nacelle mais il est préférentiellement placé le plus près possible de la structure supérieure. Si des interruptions de continuité électrique se rencontrent sur le capotage arrière mobile 7, plusieurs systèmes peuvent être placés en périphérie à des endroits jugés pertinents par l'homme de métier.

Habituellement un inverseur comporte deux types de charnières, celles dites flottantes et celles dites fixes. Elles sont utilisées pour ne pas induire de moment parasite dans la structure de la nacelle. L'inverseur est prioritairement centré par sa structure avant autour du moteur.
Les charnières qui avoisinent cette installation sont de type flottantes, c'est à dire que les deux charnières en vis à vis des demi-structures de l'inverseur sont reliées entre-elles par une bielle unique de reprise d'effort circonférentiel. La bielle est montée libre et sans contact avec la structure porteuse de l'avion.
Généralement une seule charnière, éloignée de l'accrochage de l'inverseur sur le moteur, est dite fixe c'est à dire qu'elle est réellement attachée sur un support fixe faisant partie de la structure porteuse de l'avion.
C'est l'alignement avec cette charnière qui est préférentiellement recherché. Le but étant de réduire au minimum le chemin d'évacuation du courant, on comprendra alors l'utilité de cette disposition.
Dans le cas d'un inverseur à grilles l'emplacement de la charnière fixe se situe au voisinage de la ferrure support de grilles 22, ce qui privilégie le choix de cet emplacement.

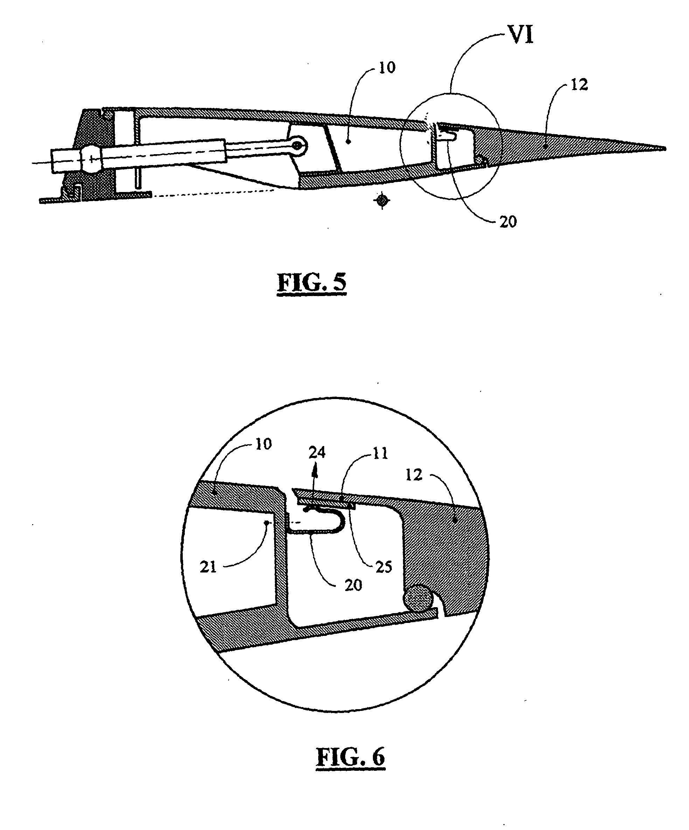

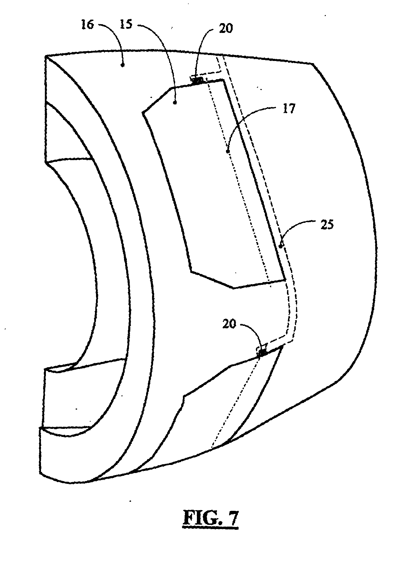

Pour un inverseur à portes, les figures 5 et 6 représentent l'emplacement privilégié pour assurer un cheminement optimal vers la charnière fixe qui est situé vers l'arrière de la nacelle comme sur l'inverseur à grilles.
La structure arrière de la porte 10 vient en jet direct en recouvrement interne avec la structure amont 11 de la virole fixe arrière 12. Une lame ressort 20, ayant les caractéristiques précédemment définies, est fixée sur le retour arrière de la structure de la porte 10 de telle manière qu'elle n'interfère pas avec la structure fixe lors de la manoeuvre de l'élément mobile. La lame ressort 20 vient au contact de la structure fixe en son interne. Si le matériau de la structure fixe 12 au contact de la lame ressort 20 est bon conducteur, un simple feuillard de résistance à l'usure peut être placé à l'interface sur la structure interne de la structure fixe 12.
Si le matériau de la structure fixe 12 à l'interface avec la lame ressort 20 n'est pas bon conducteur, une bande de matériau conducteur 25 peut être placée à l'interne de l'amont 11.
Cette bande 25 intéresse une partie de la périphérie de la structure fixe arrière 12 et peut mettre à la masse simultanément plusieurs éléments mobiles. La bande 25 est ensuite reliée à la structure fixe supérieure de l'inverseur par une liaison adaptée, mettant ainsi toutes les parties mobiles au même potentiel que le reste de la structure de 1a nacelle.

La figure 7 montre l'application de ce moyen sur un inverseur du type décrit par EP-A-0 822 327. La structure de la porte 15 plongeant dans une direction centripète par rapport à l'axe longitudinal de la nacelle et l'arrière de la porte pouvant légèrement déborder de la structure externe de la nacelle, l'emplacement préférentiel de l'installation de la lame ressort 20 se situe en partie latérale de la structure de la porte 15. La position longitudinale la mieux adaptée est celle qui garde la lame ressort 20 à l'intérieur de la structure fixe 16 dans tous les modes d'utilisation de l'inverseur, ceci afin d'éviter toute découpe dans la structure externe fixe pour permettre le débattement de la lame. Ce paramètre place donc le moyen, pour cet exemple, en amont du pivot 17 de la porte 15.
Le concept d'inverseur à portes écopes ayant les pivots 17 de portes 15 reculés par rapport au concept de porte traditionnel, l'emplacement du contact de mise à la masse des éléments mobiles reste proche de la zone de la charnière fixe de l'inverseur.
La continuité électrique entre les portes 15 se fait soit directement par le matériau de la structure fixe soit par une bande de matériau conducteur 25 contournant la structure fixe en arrière de la porte 15 supérieure et reliant les deux portes à la masse de la nacelle.

Bien d'autres emplacements sont possibles comme l'aval de la structure externe de la porte 15 mais un risque de bouchage local de la section d'échappement interne de la porte peut réduire les performances aérodynamiques.

## Revendications

1. Nacelle de turboréacteur à double flux comportant un dispositif d'inversion de poussée comportant au moins un élément mobile à grand débattement (7 ; 10) et une structure fixe **caractérisée en ce qu'**un moyen de mise à la masse de l'élément mobile (7 ; 10) en position de jet direct est constitué par un élément élastique (20) à lame ressort en matériau électriquement conducteur, disposé dans une zone de contact entre l'élément mobile (7 ; 10) et la structure fixe en position de non-inversion de poussée et dédié pour le passage du courant électrique en-dehors de tout organe mécanique utilisé pour le déplacement et sans pièce de jonction mobile par rapport aux éléments de nacelle et d'inverseur.

2. Nacelle de turboréacteur à double flux selon la revendication 1 **caractérisée en ce que** lors du déplacement de l'élément mobile (7 ; 10) d'inverseur vers une position de non-inversion de poussée, lédit élément élastique (20) est déformé en écrasement.

3. Nacelle de turboréacteur à double flux selon la revendication 1 **caractérisée en ce que** la lame ressort (20) présente une forme déterminée de manière à assurer un contact permanent sur la structure fixe, ledit contact étant maintenu lors de la mise en action d'un verrouillage secondaire de l'élément mobile d'inverseur et la lame ressort (20) est disposée de manière que son orientation permet un accroissement de la pression de contact vers la structure fixe de contact sous l'effet de la force électrodynamique due au passage du courant électrique.

4. Nacelle de turboréacteur à double flux selon l'une quelconque des revendications 1 à 3 **caractérisée en ce que** ledit moyen (20) de mise à la masse est disposé près de la zone de suspension de l'inverseur de poussée.

5. Nacelle de turboréacteur à double flux selon la revendication 4 **caractérisée en ce que** ledit moyen (20) de mise à la masse est disposé au plus près d'une charnière fixe de l'inverseur de poussée.

6. Nacelle de turboréacteur à double flux selon l'une quelconque des revendications 1 à 3 **caractérisée en ce que** l'élément mobile est une porte, et **en ce que** ledit moyen (20) de mise à la masse est disposé à l'aval de la porte (10) d'inverseur.

7. Nacelle de turboréacteur à double flux selon l'une quelconque des revendications, 1 à 6 **caractérisée en ce que** les moyens (20) de mise à la masse de plusieurs éléments mobiles coopèrent avec une bande (25) en matériau électriquement conducteur placée sur la structure fixe d'inverseur de manière à assurer une mise à la masse simultanée.

8. Nacelle de turboréacteur à double flux selon l'une quelconque des revendications 1 à 5 comportant un dispositif d'inversion de poussée à portes formant écopes **caractérisée en ce que** ledit moyen (20) de mise à la masse est disposé en partie latérale de la structure de la porte (15), en amont du pivot (17) de la porte (15).

## Patentansprüche

1. Zweiflutige Turbinengondel, welche eine Vorrichtung zur Schubumkehr umfasst, welche mindestens ein bewegliches Element (7; 10) mit großer Ausfederung und eine feste Struktur umfasst, **dadurch gekennzeichnet, dass** ein Erdungsmittel des beweglichen Elementes (7; 10) in Direktdüsenstrahlposition aus einem elastischen Element (20) mit Federblatt aus elektrisch leitendem Material besteht, das in einer Kontaktzone zwischen dem beweglichen Element (7; 10) und der festen Struktur in Nicht-Schubumkehr-Position angeordnet und für den Durchgang des elektrischen Stroms außerhalb jeglicher mechanischer Elemente bestimmt ist, die für das Verschieben und ohne beweglichen Verbindungsteil gegenüber den Gondelelementen und der Umkehrvorrichtung verwendet werden.

2. Zweiflutige Turbinengondel nach Anspruch 1, **dadurch gekennzeichnet, dass** zum Zeitpunkt des Verschiebens des beweglichen Elementes (7; 10) der Umkehrvorrichtung zu einer Nicht-Schubumkehr-Position das elastische Element (20) druckverformt wird.

3. Zweiflutige Turbinengondel nach Anspruch 1, **dadurch gekennzeichnet, dass** das Federblatt (20) eine bestimmte Form aufweist, so dass ein permanenter Kontakt auf der festen Struktur gewährleistet ist, wobei der Kontakt während der Durchführung einer sekundären Verriegelung des beweglichen Elementes der Umkehrvorrichtung aufrechterhalten wird, und dadurch, dass das Federblatt (20) so angeordnet ist, dass seine Ausrichtung eine Erhöhung des Kontaktdrucks zur festen Struktur, mit der es in Kontakt steht, hin unter der Einwirkung der elektrodynamischen Kraft, die auf den Durchgang des elektrischen Stroms zurückzuführen ist, erlaubt.

4. Zweiflutige Turbinengondel nach einem der Ansprüche 1 bis 3, **dadurch gekennzeichnet, dass** das Erdungsmittel (20) nahe der Aufhängungszone der Schubumkehrvorrichtung angeordnet ist.

5. Zweiflutige Turbinengondel nach Anspruch 4, **dadurch gekennzeichnet, dass** das Erdungsmittel (20) so nahe wie möglich bei einem festen Drehgelenk der Schubumkehrvorrichtung angeordnet ist.

6. Zweiflutige Turbinengondel nach einem der Ansprüche 1 bis 3, **dadurch gekennzeichnet, dass** das bewegliche Element eine Tür ist und dadurch, dass das Erdungsmittel (20) stromabwärts von der Tür (10) der Umkehrvorrichtung angeordnet ist.

7. Zweiflutige Turbinengondel nach einem der Ansprüche 1 bis 6, **dadurch gekennzeichnet, dass** die Erdungsmittel (20) mehrerer beweglicher Elemente mit einem Band (25) aus elektrisch leitendem Material zusammenwirken, das auf der festen Struktur der Umkehrvorrichtung so angeordnet ist, dass eine gleichzeitige Erdung gewährleistet wird.

8. Zweiflutige Turbinengondel nach einem der Ansprüche 1 bis 5, welche eine Schubumkehrvorrichtung mit Türen aufweist, welche Schaufeln bilden, **dadurch gekennzeichnet, dass** das Erdungsmittel (20) im seitlichen Abschnitt der Struktur der Tür (15) stromaufwärts vom Drehzapfen (17) der Tür (15) angeordnet ist.

## Claims

1. Pod for a ducted fan turbojet engine having a thrust reverser system with at least one mobile element which effects a long displacement (7; 10) and a fixed structure, **characterised in that** a means for grounding the mobile element (7; 10) in forward thrust mode is provided in the form of an elastic element (20) with a leaf spring made from an electrically conductive material, disposed in a contact zone between the mobile element (7; 10) and the fixed structure in non-reversed thrust mode, and dedicated to shunting the electric current away from any mechanical element used for displacement purposes and which has no connecting piece that is mobile relative to the elements of the pod and the reverser.

2. Pod for a ducted fan turbojet engine as claimed in claim 1, **characterised in that** when the mobile element (7; 10) of the reverser is displaced into a non-reverse thrust mode, said elastic element (20) is deformed by compression.

3. Pod for a ducted fan turbojet engine as claimed in claim 1, **characterised in that** the leaf spring (20) is of a shape specified to ensure permanent contact on the fixed structure, said contact being maintained when a secondary locking system of the mobile element of the reverser is actuated, and the leaf spring (20) is disposed so that its orientation permits an increase in contact pressure towards the fixed contact structure under the effect of electrodynamic force induced by the passage of the electric current.

4. Pod for a ducted fan turbojet engine as claimed in any of claims 1 to 3, **characterised in that** said grounding means (20) is disposed close to the zone at which the thrust reverser is suspended.

5. Pod for a ducted fan turbojet engine as claimed in claim 4, **characterised in that** said grounding means (20) is disposed as close as possible to a fixed hinge of the thrust reverser.

6. Pod for a ducted fan turbojet engine as claimed in any one of claims 1 to 3, **characterised in that** the mobile element is a door and said grounding means (20) is disposed downstream of the reverser door (10).

7. Pod for a ducted fan turbojet engine as claimed in any one of claims 1 to 6, **characterised in that** the grounding means (20) of several mobile elements co-operate with a strip (25) of electrically conductive material applied to the reverser fixed structure to produce simultaneous grounding.

8. Pod for a ducted fan turbojet engine as claimed in any one of claims 1 to 5 with a thrust reverser device with scoop-type doors, **characterised in that** said grounding means (20) is disposed in the lateral part of the structure of the door (15), upstream of the pivot (17) of the door (15).
